# EUROPEAN PATENT SPECIFICATION

(11) **EP 2 074 758 B1**
(45) Date of publication and mention of the grant of the patent: **04.08.2010**
(21) Application number: 07820671.1
(22) Date of filing: 28.09.2007
(51) Int. Cl.: H04L 12/437

(54) **METHOD FOR PROTECTION SWITCHING IN RING TOPOLOGIES**
VERFAHREN ZUR SCHUTZUMSCHALTUNG IN RINGTOPOLOGIEN
PROCÉDÉ DE COMMUTATION DE PROTECTION DANS TOPOLOGIES EN ANNEAU

(30) Priority: 29.09.2006 EP 06020609
(43) Date of publication of application: 01.07.2009
(73) Proprietor: Nokia Siemens Networks GmbH & Co. KG, 81541 München (DE)
(72) Inventor: DE FRIAS REBELO NUNES, Pedro Ricardo, 2795016 Linda-a-Velha (PT)
(86) International application number: PCT/EP2007/060283
(87) International publication number: WO 2008/037781

(56) References cited:
- WO-A-2006/067110
- WO-A-2006/073945
- CA-A1- 2 477 070
- US-A1- 2006 209 681
- US-B1- 6 430 151
- US-B1- 6 766 482
- SIEMENS COMMUNICATION: "SURPASS Cerrier Ethernet" INTERNET CITATION, [Online] 29 January 2006 (2006-01-29), XP002449411 Retrieved from the Internet: URL:http://optical.usa.siemens.com/carrier ethernet/downloads/Siemens%20CE _%20Focus%20On%20Ethernet%20Ring%20Protect ion%20_%20final_%2029012006.pd> [retrieved on 2007-09-03]
- FAQS ORG: "RFC 3619 - Extreme Network's Ethernet Automatic Protection Switching (EAPS) Version 1" INTERNET CITATION, [Online] October 2003 (2003-10), XP002449412 Retrieved from the Internet: URL:http://www.faqs.org/rfcs/rfc3619.html> [retrieved on 2007-09-03] cited in the application

## Description

The invention relates to a method for protection switching in a data network according to claim 1.

Data networks including a ring, called data ring, are well known. Such data networks may comprise one or more rings. One example for such a data ring is an Ethernet ring. These rings comprise protection switching and, therefore, prevent single points of failures. However, if Ethernet technology or a similar technology is chosen for data transmission such a topology creates additional problems, as it is always necessary to prevent the formation of a loop inside the network.

The principle of the Ethernet ring protection mechanism ERP is described in US Patent 6,430,151. A redundancy or ring manager, which is connected to the line ends of a ring containing a plurality of nodes, checks the network by transmitting and receiving test packets. If there is an interruption in the ring, the redundancy or ring manager connects the line ends.

This method is described in detail for one or more rings having a common node in US Patent 6,766,482 B1 assigned to Extreme Networks and IETF RFC 3619. It is known as "Ethernet Automatic Protection Switching", EAPS.

Another method to avoid loops in a network using Ethernet technology is disclosed in the international publication WO2006/073945A2 where multiple intelligent nodes are placed in the ring that can communicate with each other.

Ethernet ring protection mechanisms such as SIEMENS ERP, described in WO 1999046908 A1 and US 6430151 B1, and EAPS rely on a redundancy manager or a ring master to coordinate ring protection activities. A suchlike method is furthermore described in the Canadian Patent Application CA2477070A1.

The protection is achieved by preventing the formation of link-layer loops in a physical Ethernet ring, where the ring manager takes the active role in preventing the formation of such loops. When the ring manager perceives the ring is healthy, i.e. all ring nodes and links are operational, the ring manager will break the natural link-layer loop by blocking traffic reception and transmission on one of its ring ports. All traffic is blocked on that port except for Ethernet ring protection control traffic, such as test packets. At link-layer, the blocking of traffic in one port of one of the nodes in the ring (in this case the ring manager) transforms the ring topology into a chain of nodes. This is necessary in L2 networks as described in IEEE 802.1. This is the normal operational state of Ethernet ring protection mechanisms, when there are no ring failures.

When a failure, i.e. an erroneous disruption, occurs in the ring, the ring manager unblocks its previously blocked port to re-establish communication between all ring nodes. The ring failures can be detected directly by the ring manager node if the failure occurs in one of its own ring ports or the ring manager can receive notifications from other ring nodes informing of failures detected at their respective ports. Additionally the ring manager node assesses the operational state of the ring by frequently sending health-check packets to both of its ring interfaces; these packets are called test packets. If the ring is operational the ring manager should receive each test packet sent on one interface over the other interface and vice-versa. If the test packets are not received, it is assumed that the ring is broken or erroneous disrupted and protection recovery actions are to be taken.

In Ethernet Link Aggregation (see IEEE 802.3) a plurality of physical Ethernet interfaces are combined into one single logical interface. For the Ethernet client layer only one "logical" interface is presented. This mechanism is used to increase bandwidth between two nodes, to allow load-sharing between several physical links, etc. The link aggregation only fails when all of the physical links are failing. When one or more physical links are failing, the traffic that was transmitted or received over these links is redirected to be transmitted and received over the other - still operational - physical links that belong to the same link aggregation or logical connection. A similar method is disclosed in US Patent Application Publication US2006/0209681A1, for example.

When Ethernet ring protection, short ERP, is applied over Link Aggregation and one physical link fails, as stated before, the aggregated link will still be operational altogether, also for Ethernet ring protection point of view. However, if the failed physical link was used to convey the Ethernet ring protection test packets, these packets will be lost. In this case, the ring manager node will assume the ring is not operational and will try to protect the network by unblocking its previously blocked ring port. This action, however, will immediately create a loop jeopardizing all communication in the ring.

It is an object of the present invention to provide a method which leads to a more reliable data transport.

A method, which solves this problem, is described in claim 1.

The present invention provides a method for protection switching in a data network including at least one ring with a plurality of nodes, wherein at least two nodes are connected via a plurality of links forming a logical connection that has a reconfiguration time in case one link fails. At least one node is formed as a ring manager (RM) for breaking the ring at one connection and checking the ring for erroneous disruptions. According to the invention the ring manager (RM) pauses a period greater than the reconfiguration time of the logical link in case the ring is erroneous disrupted, and after the pausing the ring is checked again for erroneous disruptions by the ring manager (RM). If the ring is still erroneous disrupted after the re-checking the ring manager restores the broken connection.

For example, the pausing can be done by temporarily suppressing a trigger "ring is erroneous disrupted" or "ring not healthy" which is equivalent to Loss of Test Packets - LOTP for a time period equivalent to (or longer than) the time needed for the reconfiguration using a distributor algorithm of the Link Aggregation.

When using this approach when a partial link failure of a link aggregation occurs in the ring (it may even be a failure in the interfaces of a normal node) the RM will detect the loss of the test packets, but it will still wait for some time before triggering the protection event. This will provide a chance to the partially failed link aggregation to re-converge and to overcome the failure.

Through the invention the RM node becomes immune to partial link failures in link aggregation interfaces or any node in the ring.

Despite the presence of the mechanism proposed herein, in case all physical links of the link aggregation fail, the node adjacent to the failed link aggregation will still issue a link failure and the protection is immediate, in general less than 50 ms.

Further embodiments of the invention are specified in the depending claims.

The present invention is described by way of different examples and accompanying drawings. The invention can be extended to a more complex network as well as to a network similar to the Ethernet. The invention will became more apparent with reference to the following detailed description along with the accompanying drawings, in which
Figure 1 shows a ring network with a ring manager, and
Figure 2 shows a block diagram of a node.

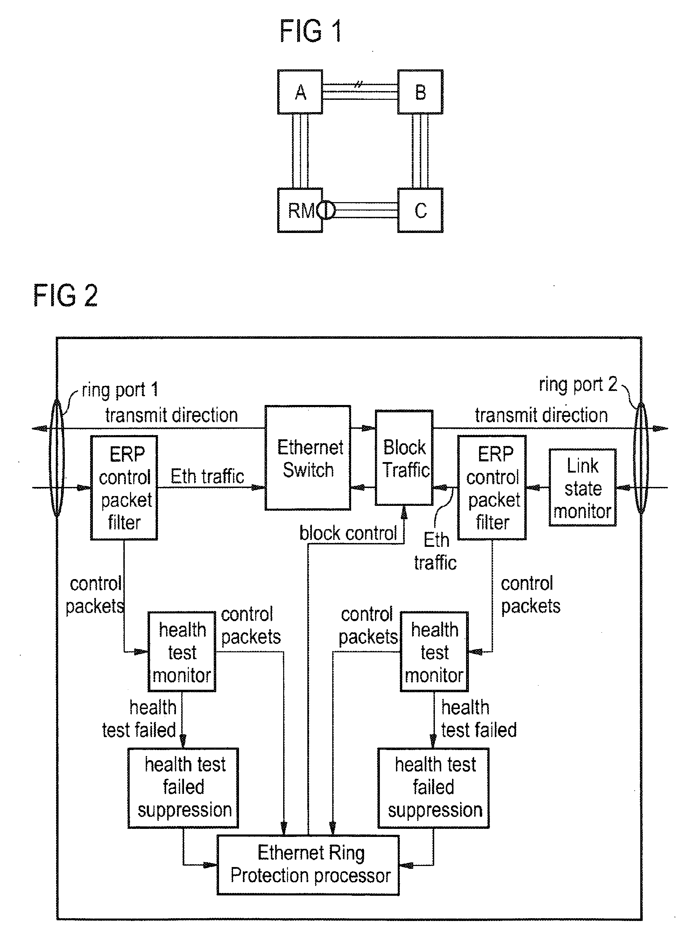

Figure 1 shows a ring network comprising nodes A, B, C and an associated ring manager node RM. Nodes A and B, B and C, C and RM and A and RM are connected via three links in each case. At least between two nodes the three links are combined to a logical connection using Ethernet link aggregation, for instance. In Figure 1 at least the three links between nodes A and B are combined to a logical connection, although this may also be the case for the connections between nodes B and C, C and RM, A and RM, respectively.

To avoid a loop in the ring the connection between nodes C and RM is knowingly broken by the port of ring manager RM, as previously described.

If one of the three links between nodes A and B is disrupted, as shown in Figure 1, a test packet that is to be transmitted over this link will be lost. In this case the ring manager will not receive its test packet and will assume that the ring is not operational. The ring manager will therefore try to protect the network by unblocking its previously blocked ring port to node B. However, in this case this would create a loop, as the two remaining links between nodes A and B and, therefore, also the connection between nodes A and B is still operational.

By waiting a period longer than the reconfiguration time of the link aggregation, and by subsequently checking again if the ring is erroneous disrupted, this loop creation can be avoided by the ring manager. In case the ring is still erroneous disrupted after the waiting period, the ring manager will perform its protection, as described.

Figure 2 shows a block diagram of a ring manager node. It consists of an Ethernet switch, where the links for ring port 1 and ring port 2 are connected. Each link comprises a transmit direction and a receive direction.

The receive direction of ring port 1 is connected to an ERP control packet filter, which filters ERP control packets from "normal" Ethernet traffic. Normal Ethernet traffic is sent to the Ethernet switch, whereas ERP control packets are sent to a so-called health test monitor, that checks if the ring is "healthy" (i.e. operational). In case the ring is healthy the control packets are sent to an Ethernet ring protection processor. Otherwise (if the health test has failed), the inventive health test suppression unit 1 will suppress a trigger "ring not healthy" for a time period equivalent or greater than the time needed for the re-configuration of the distributor algorithm of the link aggregation.

The Ethernet switch is directly connected to the transmit direction port of ring port 1. On the side of ring port 2 both the transmit direction and receive direction ports are connected via a Block Traffic unit to the Ethernet switch. Furthermore, a link state monitor and an ERP control packet filter 2are arranged on the receive direction of ring port 2. The ERP control packet filter is connected to a health test monitor 2, which in turn is connected to the Ethernet ring protection processor and a health test failed suppression unit 2. Health test monitor 2 and health test failed suppression unit 2 are identical to the already described units according to ring port 1.

The test packets are monitored by the ring manager. If a test packet sent over the ring is not received an indication "health test failed" is stated by the health test monitor and sent to the ERP processor. If the ERP processor processed the health test failed indication immediately it would create a loop as already described. But as the detection of "health test failed" is suppressed by the inventive health test failed suppression unit 1/2, the ERP processor will wait for some time, for the rest of the network to "solve" the problem. If the problem is not solved after the preset suppression time, the ring manager node will implement the appropriate protection measures.

This suppression can be enabled or disabled by management / configuration, i.e. by management or configuration systems. The duration of the temporary suppression for each trigger can also be configured by said management / configuration.

In general the solution is:
- Temporarily suppressing failures that have been detected will prevent protection actions of Ethernet ring protection of being executed once. The suppression should be long enough to allow that recovery is achieved by other means.
- The temporary suppression duration must cover the time for the ERP protection trigger (failure) to be cleared.
- The suppression only applies if there is a trigger transition from inactive to active (failure detected). In this case "active" means that the RM node is required to unblock its ports. If the trigger performs a transition from active to inactive (failure cleared), the Ethernet ring protection process immediately uses this information to calculate the proper protection actions to perform. It will also cancel the former trigger raised (detected failures) indication currently being suppressed.

Specifically the temporary suppression is applied to the protection event caused by the detection of loss of test packets.

By applying the temporary suppression to the "ring not healthy" trigger on the ring manager node in case link aggregation is used the problem is resolved in a way that the ring manager node will wait for traffic to be redirected to other physical links that are still operational. Once link aggregation has redirected the traffic to other physical links, the ring manager node will receive its test packets back and will not initiate any protection. This way a loop is avoided. The duration of the suppression should be long enough to guarantee that the traffic is redistributed over the other operational physical links and that test packets are received over the newly organized ring once more.

## Claims

1. A method for protection switching in a data network including at least one ring (ER) with a plurality of nodes (A, B, C, RM),
whereas at least two nodes are connected via a plurality of links forming a logical connection,
the logical connection having a reconfiguration time in case one link fails, and
whereas at least one node is formed as a ring manager (RM) for breaking the ring at one connection and checking the ring for erroneous disruptions,
**characterised in that**,
- in case the ring is erroneous disrupted the ring manager (RM) pauses a period equal or greater than the reconfiguration time of the logical link,
- after the pausing the ring is checked again for erroneous disruptions by the ring manager (RM), and
- if the ring is still erroneous disrupted after the re-checking the ring manager restores the broken connection.

2. A method according to claim 1,
**characterised in that**,
the data network is an Ethernet network and the logical connection is formed through Ethernet link aggregation.

3. A method according to claim 1 or 2,
**characterized in that**
the protection switching is part of the Ethernet Ring Protection.

4. A method according to one of the preceding claims,
**characterised in that**,
the method for protection switching is configurable by a management or configuration system.

5. A method according to one of the preceding claims,
**characterised in that**,
the pausing period is configurable by a management or configuration system.

6. A method according to one of the preceding claims,
**characterised in that**,
the restoring of the broken connection is performed by unblocking an alternative link.

7. Data network comprising a plurality of nodes with means arranged so as to execute the method according to one of the claims 1 to 6.

## Patentansprüche

1. Verfahren zur Schutzumschaltung in einem Datennetz, das mindestens einen Ring (ER) mit einer Mehrzahl von Knoten (A, B, C, RM) umfasst, wobei mindestens zwei Knoten über eine Mehrzahl von Strecken verbunden werden, die eine logische Verbindung bilden,
wobei die logische Verbindung eine Umkonfigurationszeit aufweist, falls eine Strecke ausfällt, und
wobei mindestens ein Knoten als ein Ringmanager (RM) zum Aufbrechen des Rings an einer Verbindung und zum Prüfen des Rings auf fehlerhafte Unterbrechungen gebildet ist,
**dadurch gekennzeichnet, dass**
- falls der Ring fehlerhaft unterbrochen wird, der Ringmanager (RM) für einen Zeitraum größer oder gleich der Umkonfigurationszeit der logischen Strecke pausiert,
- nach dem Pausieren der Ring nochmals durch den Ringmanager (RM) auf fehlerhafte Unterbrechungen geprüft wird und
- wenn der Ring nach der erneuten Prüfung immer noch fehlerhaft unterbrochen ist, der Ringmanager die aufgebrochene Verbindung wiederherstellt.

2. Verfahren nach Anspruch 1, **dadurch gekennzeichnet, dass** das Datennetz ein Ethernet-Netz ist und die logische Verbindung durch Ethernet-Streckenaggregation gebildet wird.

3. Verfahren nach Anspruch 1 oder 2, **dadurch gekennzeichnet, dass**
die Schutzumschaltung Teil des Ethernet-Ringschutzes ist.

4. Verfahren nach einem der vorhergehenden Ansprüche, **dadurch gekennzeichnet, dass**
das Verfahren zur Schutzumschaltung durch ein Verwaltungs- oder Konfigurationssystem konfigurierbar ist.

5. Verfahren nach einem der vorhergehenden Ansprüche, **dadurch gekennzeichnet, dass**
der Pausierzeitraum durch ein Verwaltungs- oder Konfigurationssystem konfigurierbar ist.

6. Verfahren nach einem der vorhergehenden Ansprüche, **dadurch gekennzeichnet, dass**
das Wiederherstellen der aufgebrochenen Verbindung durch Entblockieren einer alternativen Strecke durchgeführt wird.

7. Datennetz, das eine Mehrzahl von Knoten umfasst, mit Mitteln, die dafür ausgelegt sind, das Verfahren nach einem der Ansprüche 1 bis 6 auszuführen.

## Revendications

1. Procédé de commutation de protection dans un réseau de données incluant au moins un anneau (ER) avec une pluralité de noeuds (A, B, C, RM),
dans lequel au moins deux noeuds sont connectés par l'intermédiaire d'une pluralité de liaisons formant une connexion logique,
la connexion logique ayant un temps de reconfiguration en cas de défaillance d'une liaison, et
dans lequel au moins un noeud est formé comme un gestionnaire d'anneau (RM) pour rompre l'anneau au niveau d'une connexion et contrôler l'anneau en termes d'interruptions erronées, **caractérisé en ce que**,
- dans le cas où l'anneau est interrompu de façon erronée, le gestionnaire d'anneau (RM) fait une pause sur une période égale ou supérieure au temps de reconfiguration de la liaison logique,
- après la pause, l'anneau est à nouveau contrôlé en termes d'interruptions erronées par le gestionnaire d'anneau (RM), et
- si l'anneau reste interrompu de façon erronée après le nouveau contrôle, le gestionnaire d'anneau restaure la connexion rompue.

2. Procédé selon la revendication 1,
**caractérisé en ce que**,
le réseau de données est un réseau Ethernet et la connexion logique est formée par agrégation de liaisons Ethernet.

3. Procédé selon la revendication 1 ou 2,
**caractérisé en ce que**
la commutation de protection fait partie de la Protection d'Anneau Ethernet.

4. Procédé selon l'une des revendications précédentes,
**caractérisé en ce que**,
le procédé de commutation de protection est configurable par un système de gestion ou de configuration.

5. Procédé selon l'une des revendications précédentes,
**caractérisé en ce que**,
la période de pause est configurable par un système de gestion ou de configuration.

6. Procédé selon l'une des revendications précédentes,
**caractérisé en ce que**,
la restauration de la connexion rompue est effectuée par déblocage d'une autre liaison.

7. Réseau de données comprenant une pluralité de noeuds avec des moyens agencés de façon à exécuter le procédé selon l'une des revendications 1 à 6.
